# EUROPEAN PATENT APPLICATION

(11) **EP 4 733 142 A1**
(43) Date of publication of application: **29.04.2026**
(21) Application number: 24208462.2
(22) Date of filing: 23.10.2024
(51) Int. Cl.: B60R 16/023, B60L 50/60

(54) **MODULAR HIGH VOLTAGE JUNCTION BOX**

(71) Applicant: Volvo Truck Corporation, 405 08 Göteborg (SE)
(72) Inventor: KLINTH, Mikael, 468 34 Vargön (SE); SERRA DALMAU, Albert, 416 72 Göteborg (SE); ROY, Sanchayan, 436 35 Göteborg (SE); THENOON, Mohammad, 424 57 Göteborg (SE)
(74) Representative: Zacco Sweden AB

(57) **Abstract**

A high voltage junction box, comprising: a housing having a plurality of sides forming a frame; a plurality of high voltage connectors provided at one or more of said sides; at least one frame-shaped main busbar arranged inside the housing, wherein each of the at least one frame-shaped main busbar extends along each of said sides; and a plurality of electrical conductors arranged to connect the at least one frame-shaped main busbar to the high voltage connectors.

## Description

### TECHNICAL FIELD

The disclosure relates generally to a high voltage junction box. In particular aspects, the disclosure relates to a modular high voltage junction box. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

High voltage junction boxes may generally be used in heavy-duty vehicles to connect various components, such as battery packs, electric traction motors, charging equipment, etc. When conventionally designing high voltage junction boxes, the position of high voltage (HV) connectors, low voltage (LV) connectors, and coolant ports are dependent on the installation in the particular vehicle in question. In other words, present high voltage junction boxes may be installation unique boxes with specific housing, HV connector location and orientation, LV connector, and coolant inlet/outlet positions to meet installation requirements as needed. This may result in many variants of high voltage junction boxes with the same basic functionality.

### SUMMARY

According to a first aspect of the disclosure, there is provided a high voltage junction box, comprising: a housing having a plurality of sides forming a frame; a plurality of high voltage connectors provided at one or more of said sides; at least one frame-shaped main busbar arranged inside the housing, wherein each of the at least one frame-shaped main busbar extends along each of said sides; and a plurality of electrical conductors arranged to connect the at least one frame-shaped main busbar to the high voltage connectors. The first aspect of the disclosure may seek to provide a high voltage junction box that readily can be adapted and/or manufactured for a specific installation. A technical benefit of having a frame-shaped main busbar that extends along each of the sides of the housing may include that the main busbar readily can be connected to a high voltage connector on any side of the housing, which in turn may give flexibility in adapting and/or manufacturing the high voltage junction box for a specific installation.

Optionally in some examples, including in at least one preferred example, all of said sides of the housing may be equal. A technical benefit may include that any lids at the sides may have a standard size, which in turn may reduce manufacturing cost.

Optionally in some examples, including in at least one preferred example, each of the at least one frame-shaped main busbar may be rectangular. One or more of the at least one frame-shaped main busbar may for example be square.

Optionally in some examples, including in at least one preferred example, each of the at least one frame-shaped main busbar may have a number of elongated main busbar portions corresponding to the number of sides of the housing, wherein each of said elongated main busbar portions may extend along a respective one of the sides of the housing.

Optionally in some examples, including in at least one preferred example, each electrical conductor may extend from a respective high voltage connector of the high voltage connectors to an elongated main busbar portion of one of the at least one frame-shaped main busbar, which elongated main busbar portion is closest to the side of the housing at which the high voltage connector is arranged. A technical benefit may include that the electrical conductors do not have to extend across the housing.

Optionally in some examples, including in at least one preferred example, the plurality of electrical conductors may comprise flexible busbars. A technical benefit may include that tolerances may be managed. The electrical conductors could alternatively or in addition comprise solid busbars, cables, and/or triads, for example.

Optionally in some examples, including in at least one preferred example, the at least one frame-shaped main busbar may comprise at least one positive main busbar and a negative main busbar.

Optionally in some examples, including in at least one preferred example, the at least one frame-shaped main busbar may comprise a first frame-shaped main busbar and second frame-shaped main busbar surrounding the first frame-shaped main busbar, wherein the first frame-shaped main busbar is connected to a subset of the high voltage connectors by a first subset of the electrical conductors, and wherein the second frame-shaped main busbar is connected to a greater number of the high voltage connectors by a second subset of the electrical conductors, the electrical conductors of the second subset being shorter than the electrical conductors of the first subset. A technical benefit may include that the greater number of the high voltage connectors easily can be connected.

Optionally in some examples, including in at least one preferred example, the at least one frame-shaped main busbar may comprise a first frame-shaped main busbar and a second frame-shaped main busbar, wherein the high voltage junction box further comprises a cooling interface arranged between the first frame-shaped main busbar and the housing such that the cooling interface is in contact with the first frame-shaped main busbar for transferring heat from the first frame-shaped main busbar, and wherein the second frame-shaped main busbar is arranged elevated inside the housing compared to the first frame-shaped main busbar and not in contact with the cooling interface. A technical benefit may include saved space laterally in the house, as the elevated second frame-shaped main busbar could be placed substantially directly above the first frame-shaped main busbar.

Optionally in some examples, including in at least one preferred example, the housing further may comprise a base plate. Moreover, at least one further component of the voltage junction box may be: centrally positioned relative to said base plate; surrounded by each of the least one frame-shaped main busbar; and electrically connected to at least one of the at least one frame-shaped main busbar. The least one further component may for example be at least one fuse.

Optionally in some examples, including in at least one preferred example, further comprising a plurality of lids, one at each side of the housing, wherein the plurality of high voltage connectors are provided in one or more of said lids. A technical benefit may include that the configuration of high voltage connectors may be customized for a specific installation of the high voltage junction box without having to customize the housing or the at least one frame-shaped main busbar, which may facilitate and/or reduce the cost of manufacturing of the high voltage junction box.

Optionally in some examples, including in at least one preferred example, each lid may have space for up to four high voltage connectors and (optionally) one low voltage connector. Each lid could for example have a length in the range of 250-750mm, and a width in the range of 80-160mm.

Optionally in some examples, including in at least one preferred example, each side of the housing may have an opening, wherein each opening is sealingly covered by one of said lids. A technical benefit may include that the inside of the high voltage junction box may be protected from the outside environment.

According to a second aspect of the disclosure, there is provided a vehicle comprising the high voltage junction box according to the first aspect of the disclosure.

According to a third aspect of the disclosure, there is provided a kit comprising a first high voltage junction box according to according to the first aspect of the disclosure and a second high voltage junction box according to according to the first aspect of the disclosure, wherein the housing of the first high voltage junction box is identical to the housing of the second high voltage junction box, and wherein the lids of the first high voltage junction box have a different configuration of high voltage connectors than the lids of the second high voltage junction box. A technical benefit may include that the housings may be standardized, which may facilitate and/or reduce the cost of manufacturing of high voltage junction boxes for different installations. Also the at least one frame-shaped main busbar and/or the size of the lids may be standardized/equal across the high voltage junction boxes. Thus, the high voltage junction boxes may be regarded as modular high voltage junction boxes.

According to a fourth aspect of the disclosure, there is provided a method of manufacturing a high voltage junction box, the method comprising: providing a housing having a plurality of sides forming a frame; providing a plurality of high voltage connectors at one or more of said sides; arranging at least one frame-shaped main busbar inside the housing, wherein each of the at least one frame-shaped main busbar extends along each of said sides; and arranging a plurality of electrical conductors to connect the at least one frame-shaped main busbar to the high voltage connectors. The fourth aspect of the disclosure may seek to provide a method of manufacturing a high voltage junction box that readily can be adapted for a specific installation. A technical benefit of having a frame-shaped main busbar that extends along each of the sides of the housing may include that the main busbar readily can be connected to a high voltage connector on any side of the housing, which in turn may give flexibility in adapting and/or manufacturing adapting the high voltage junction box for a specific installation.

Optionally in some examples, including in at least one preferred example, providing a plurality of high voltage connectors at one or more of said sides may comprise arranging a plurality of lids, one at each side of the housing, wherein the plurality of high voltage connectors are provided in one or more of said lids. A technical benefit may include that the configuration of high voltage connectors may be customized for a specific installation of the high voltage junction box without having to customize the housing or the at least one frame-shaped main busbar, which may facilitate and/or reduce the cost of manufacturing of the high voltage junction box.

Optionally in some examples, including in at least one preferred example, the method may further comprise machining holes in one or more of said lids for the plurality of high voltage connectors. A technical benefit may include that holes for the plurality of high voltage connectors only have to be machined where needed for a specific installation of the high voltage junction box.

Optionally in some examples, including in at least one preferred example, said high voltage junction box may be a first high voltage junction box, wherein the method further comprises manufacturing a second high voltage junction box by: providing a housing having a plurality of sides forming a frame, wherein the housing of the first high voltage junction box is identical to the housing of the second high voltage junction box; arranging a plurality of lids, one at each side of the housing, wherein a plurality of high voltage connectors are provided in one or more of said lids; arranging at least one frame-shaped main busbar inside the housing, wherein each of the at least one frame-shaped main busbar extends along each of said sides; and arranging a plurality of electrical conductors to connect the at least one frame-shaped main busbar to the high voltage connectors, wherein the lids of the first high voltage junction box have a different configuration of high voltage connectors than the lids of the second high voltage junction box. A technical benefit may include that the housings may be standardized, which may facilitate and/or reduce the cost of manufacturing of high voltage junction boxes for different installations. Also the at least one frame-shaped main busbar and/or the size of the lids may be standardized/equal across the high voltage junction boxes. Thus, the high voltage junction boxes may be regarded as modular high voltage junction boxes.

According to a fifth aspect of the disclosure, there is provided a high voltage junction box, comprising: a housing having a plurality of sides; a plurality of high voltage connectors provided at at least one of said sides; at least one lid provided at at least one of the sides of the housing, wherein the plurality of high voltage connectors are provided in the at least one lid, at least one main busbar arranged inside the housing; and a plurality of electrical conductors arranged to connect the at least one main busbar to the high voltage connectors. The fifth aspect of the disclosure may seek to provide a high voltage junction box that readily can be adapted and/or manufactured for a specific installation. A technical benefit of having the at least one lid may include that the configuration of high voltage connectors may be customized for a specific installation of the high voltage junction box without having to customize the housing, which may facilitate and/or reduce the cost of manufacturing of the high voltage junction box.

According to a sixth aspect of the disclosure, there is provided a kit of parts for assembling a high voltage junction box (for example according to the fifth aspect), the kit of parts comprising: a housing having a plurality of sides; a plurality of high voltage connectors; a plurality of lids, wherein each lid is adapted to be provided at one of said sides, and wherein the plurality of lids comprises lids with different numbers of interfaces for different numbers of the high voltage connectors; at least one main busbar arrangeable inside the housing; and a plurality of electrical conductors arrangeable to connect the at least one main busbar to the high voltage connectors.

Optionally in some examples, including in at least one preferred example, the plurality of sides of the housing may form a frame.

Optionally in some examples, including in at least one preferred example, the at least one main busbar may be at least one frame-shaped main busbar.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary high voltage junction box according to an example.
**FIG. 2** is a perspective view of an exemplary housing of a high voltage junction box according to an example.
**FIG. 3** is a perspective view of an exemplary housing and lids of a high voltage junction box according to an example.
**FIG. 4** is a perspective view of an exemplary lid with holes for high voltage connectors according to an example.
**FIG. 5** is a perspective view of an exemplary lid without any holes for high voltage connectors according to an example.
**FIG. 6** is a perspective view of an exemplary lid with four high voltage connectors 22 and one low voltage connector 23.
**FIG. 7** is a perspective view showing an exemplary first positive main busbar of a high voltage junction box according to an example.
**FIG. 8** is a perspective view showing an exemplary second positive main busbar of a high voltage junction box according to an example.
**FIG. 9** is a perspective view showing an exemplary negative main busbar of a high voltage junction box according to an example.
**FIG. 10** is a diagonal cross-section of an exemplary high voltage junction box comprising a cooling interface according to an example.
**FIG. 11** is a perspective view of an exemplary high voltage junction box comprising a coolant inlet and a coolant outlet according to an example.
**FIG. 12** is a flow chart of an exemplary method of manufacturing a high voltage junction box according to an example.
**FIG. 13** is an exemplary kit of high voltage junction boxes according to an example.
**FIG. 14** **is** another view of **FIG. 1****,** according to an example.
**FIG. 15** **is** another view of **FIG. 1****,** according to an example.

### DETAILED DESCRIPTION

The detailed description set forth below provides information and examples of the disclosed technology with sufficient detail to enable those skilled in the art to practice the disclosure.

Aspects of the disclosure may seek to provide a high voltage junction box that readily can be adapted and/or manufactured for a specific installation. In this regard, a high voltage junction box may comprise: a housing having a plurality of sides forming a frame; a plurality of high voltage connectors provided at one or more of said sides; at least one frame-shaped main busbar arranged inside the housing, wherein each of the at least one frame-shaped main busbar extends along each of said sides; and a plurality of electrical conductors arranged to connect the at least one frame-shaped main busbar to the high voltage connectors. A technical benefit of having a frame-shaped main busbar that extends along each of the sides of the housing may include that the main busbar readily can be connected to a high voltage connector on any side of the housing, which in turn may give flexibility in adapting and/or manufacturing the high voltage junction box for a specific installation.

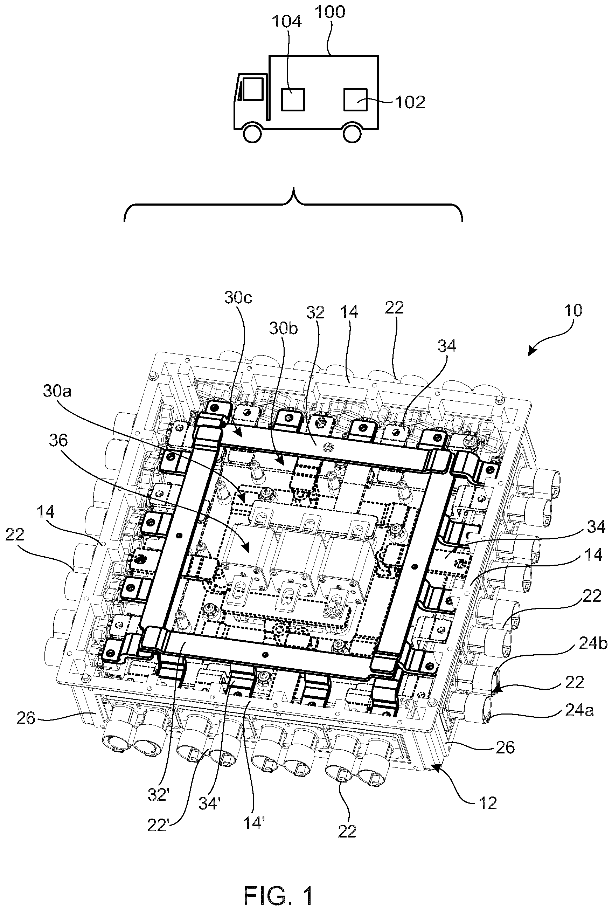

**FIG. 1** is a perspective view of an exemplary high voltage junction box 10 according to an example. The high voltage junction box 10 may for example be comprised in a vehicle 100. The vehicle 100 may be a heavy-duty vehicle, such as a truck, bus, or construction equipment, among other vehicle types. The high voltage junction box 10 may generally be used to connect various electrical components, such as at least one battery pack 102 of the vehicle 100, at least one electric traction motor 104 of the vehicle 100, charging equipment for charging at least one battery pack 102, etc. `High voltage' may here be construed >300V. 'Low voltage' may here construed as <24V.

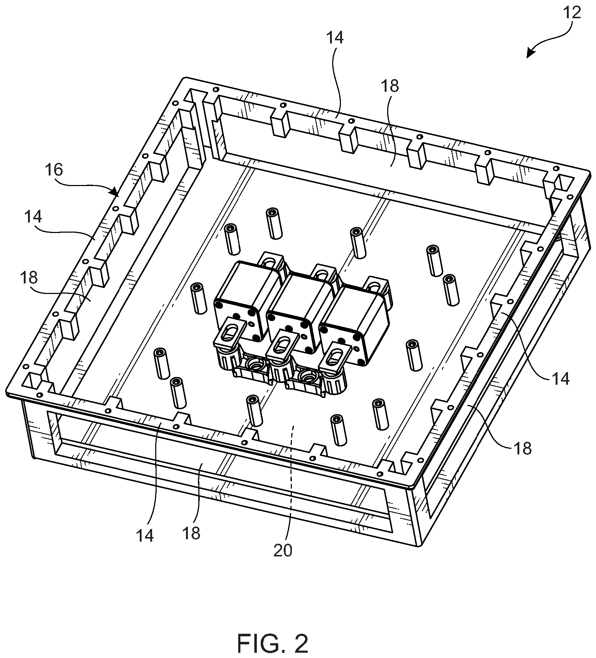

The high voltage junction box 10 comprises a housing 12. The housing 12 may have a plurality of sides (or sidewalls) 14. The sides 14 may together form a frame 16, see **FIG. 2****.** The number of sides 14 of the housing 12 may for example be four. The four sides 14 may form a rectangular frame 16. Moreover, all of the sides 14 of the housing 12 may be equal, at least in size and/or shape. The sides 14 of the housing 12 may thus for example form a square frame 16, as in **FIG. 1****.** Alternatively the housing 12 could have a different number of sides, such as six sides forming a hexagonal frame, eight sides forming an octagonal frame, etc.

Each side 14 of the housing 12 may have an opening 18. The openings 18 may be elongated. The openings 18 may for example be rectangular. Moreover, all of the openings 18 may be equal, at least in size, shape, and/or position on the respective side 14.

The housing 12 may further comprise a base plate 20. The base plate 20 may form a bottom of the housing 12, from which bottom the sides 14 are erected. Like the frame 16, the base plate 20 may for example be rectangular. In particular, the base plate 20 may be a square base plate, as in **FIG. 2****.**

The housing 12 (sides 14 and base plate 20) can be made in one piece. The housing 12 may for example be casted. The housing 12 may for example be made of aluminium. The housing 12 may be a standardized housing.

The high voltage junction box 10 further comprises plurality of high voltage connectors 22. Each high voltage connector 22 may comprise two couplings 24a-b (positive and negative), as well as elements for conducting electric current.

The high voltage connectors 22 may be provided at one or more of the sides 14 of the housing 12. The high voltage connectors 22 may for example be provided at all of the sides 14 of the housing 12, as in **FIG. 1****.** The number and position of the high voltage connectors 22 may depend on the intended specific application of the high voltage junction box 10.

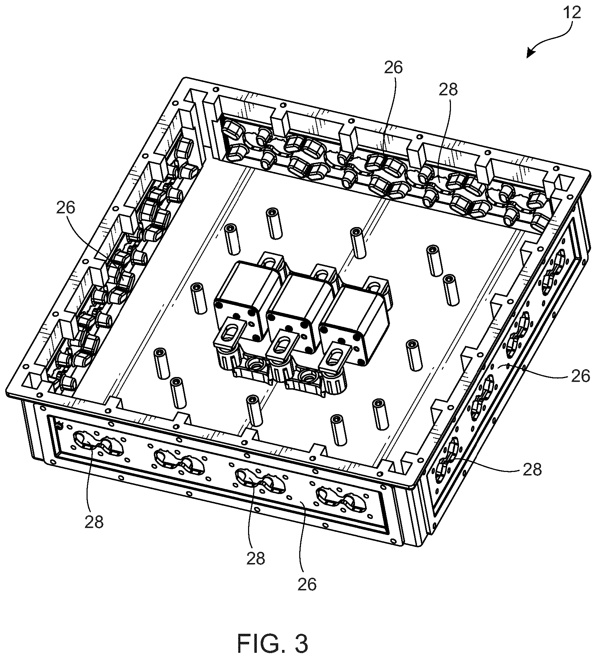

Specifically, the plurality of high voltage connectors 22 may be provided in one or more lids 26 of the high voltage junction box 10. The lids 26 may be arranged to sealingly cover the aforementioned openings 18 in the sides 14 of the housing 12. That is, the lids 26 may be arranged one at each side 14 of the housing 12, wherein each opening 18 is sealingly covered by one of the lids 26. Each lid 26 may for example be attached to the portion of the respective side(wall) 14 of the housing 12 that surrounds the opening 18, see **FIG. 3****.** The lids 26 may for example be attached to the sides 14 of the housing 12 by screws. Alternatively, the lids 26 could be welded, glued, etc. to the sides 14 of the housing 12. The lids 26 may be referred to as sealed component lids.

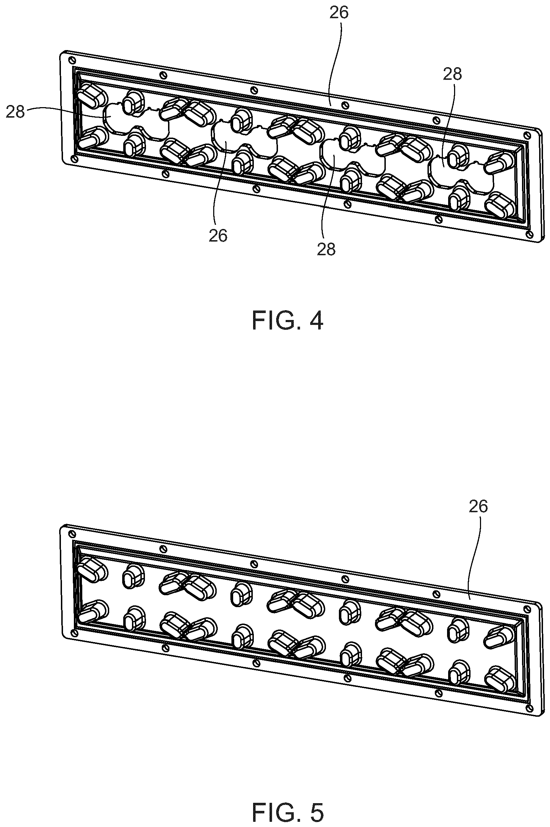

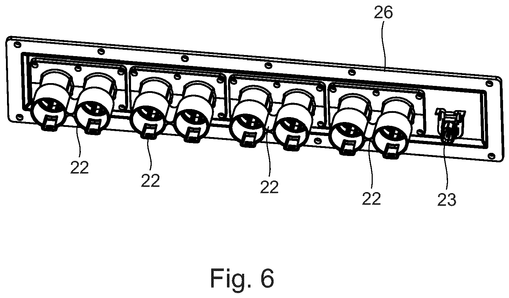

The lids 26 may be elongated. The lids 26 may for example be rectangular. The lids 26 may for example be made of aluminium. Moreover, all the lids 26 may have the same, standard size. Each lid 26 may for example have space for up to four high voltage connectors 22 placed next to each other, and optionally one low voltage connector. Each lid 26 may for example have a length in the range of 250-750mm, and a width in the range of 80-160mm. The lids 26 may comprise interfaces for the plurality of high voltage connectors 22. The interfaces may for example be (machined) holes 28, namely one hole 28 per high voltage connector 22. An exemplary lid 26 having four holes 28 for four high voltage connectors 22 is shown in **FIG. 4****.** Another exemplary lid 26 without any holes for high voltage connectors is shown in **FIG. 5****.** The lid 26 in **FIG. 5** may on one hand represent a precursor or blank lid before one or more holes 28 are machined, and on the other hand a final lid which does not have any holes for high voltage connectors. Another exemplary lid 26 with four high voltage connectors 22 and one low voltage connector 23 is shown in **FIG. 6****.**

The high voltage junction box 10 further comprises at least one main busbar 30a-c. The at least one main busbar 30a-c is generally arranged inside the housing 12.

Each of the at least one main busbar 30a-c may be frame-shaped and extend along each side 14 of the housing 12. Specifically, each of the at least one (frame-shaped) main busbar 30a-c may have a number of elongated main busbar portions 32 corresponding to the number of sides 14 of the housing 12, wherein each of the elongated main busbar portions 32 extends along a respective side 14 of the housing 12. Each of the at least one frame-shaped main busbar 30a-c may for example be rectangular (e.g. square), as formed by the (four) elongated main busbar portions 32, thereby matching the shape of the frame 16 formed by the (four) sides 14 of the housing 12. Each of the at least one (rectangular/square) frame-shaped main busbar 30a-c may be arranged (substantially) parallel to the base plate 20 of the housing. Each of the at least one frame-shaped main busbar 30a-c is preferably a continuous or complete loop, although it could alternatively include a (small) gap.

The high voltage junction box 10 further comprises a plurality of electrical conductors 34. The electrical conductors 34 may be arranged to connect the at least one frame-shaped main busbar 30a-c to the high voltage connectors 22. The electrical conductors 34 may for example be welded, fixed with fasteners, fixed by brazing, etc. Each electrical conductor 34 may for example be a flexible busbar.

Each electrical conductor 34 preferably extends from a high voltage connector 22 to an elongated main busbar portion 32 of a frame-shaped main busbar 30a-c, which elongated main busbar portion 32 is closest to the side 14 of the housing 12 at which that high voltage connector 22 is arranged. For example, the electrical conductor denoted 34' in **FIG. 1** extends from high voltage connector 22' at side 14' to elongated main busbar portion 32' of the frame-shaped main busbar 30c, which elongated main busbar portion 32' is the elongated main busbar portion 32' (of the frame-shaped main busbar 30c) that is closest to side 14' of the housing 12, rather than extending across the housing 12 to say the elongated main busbar portion 32 which is closest to the opposite side 14 of the housing 12.

The high voltage junction box 10 may further comprise at least one further component 36. The at least one further component 36 may for example be one or more fuses 36. The one or more fuses may be scalable either in size or placed in parallel. The least one further component 36 may be centrally positioned relative to the base plate 20 of the housing 12 (as seen from above). Moreover, the least one further component 36 may be surrounded by the least one frame-shaped main busbar 30a-c. Moreover, the at least one further component 36 may be electrically connected to at least one of the frame-shaped main busbar(s) 30a-c.

Returning to the at least one frame-shaped main busbar 30a-c, the at least one frame-shaped main busbar 30a-c may comprise at least one positive frame-shaped main busbar 30a-b and a negative frame-shaped main busbar 30c. The at least one positive frame-shaped main busbar 30a-b may comprise a first positive frame-shaped main busbar 30a and a second positive frame-shaped main busbar 30b. The first positive frame-shaped main busbar 30a and its associated electrical conductors 34 are indicated by (short) dash lines in e.g. **FIG. 1****.** The second positive frame-shaped main busbar 30b and its associated electrical conductors 34 are indicated by dash dot lines in e.g. **FIG. 1****.** The negative frame-shaped main busbar 30b and its associated electrical conductors 34 are indicated by solid lines in e.g. **FIG. 1****.** The first positive frame-shaped main busbar 30a may for example be used for connection to the at least one battery pack 102 of the vehicle 100, whereas the second positive frame-shaped main busbar 30b may be used for connection to other electrical components. One or both of the first positive frame-shaped main busbar 30a and the second positive frame-shaped main busbar 30b may be electrically connected to the one or more fuses via a respective electrical connection 38a-b. The first positive frame-shaped main busbar 30a may be connected to a different size of the (one or more) fuses than the second positive frame-shaped main busbar 30b.

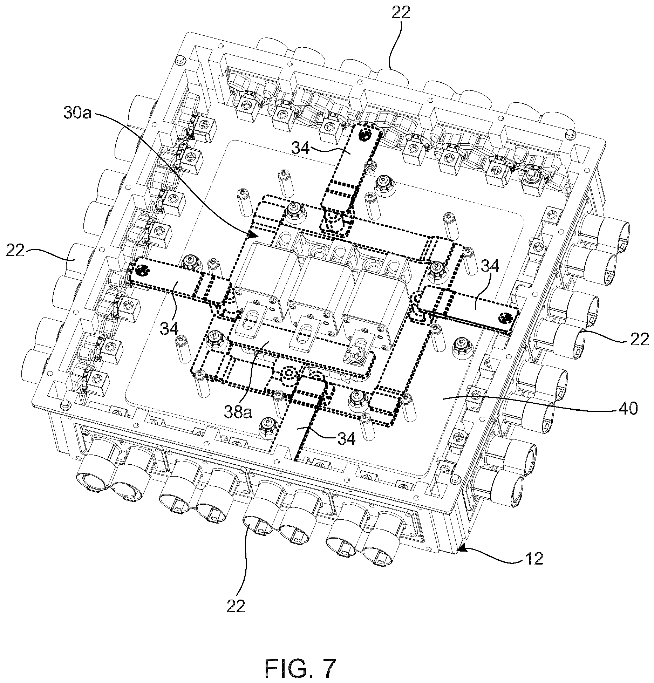

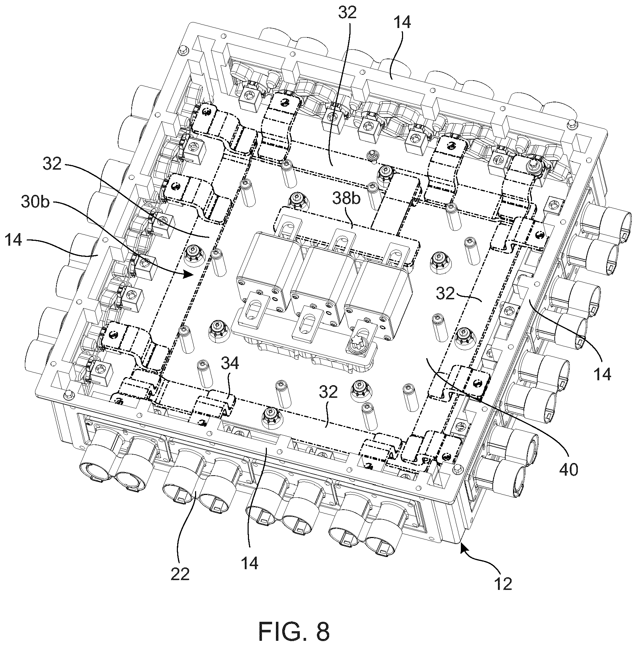

The second positive frame-shaped main busbar 30b may be arranged to surround the first positive frame-shaped main busbar 30a. To this end, the second positive frame-shaped main busbar 30b may be larger than the first positive frame-shaped main busbar 30a. Moreover, the first positive frame-shaped main busbar 30a may be connected to a subset of the high voltage connectors 22 by a first subset of the electrical conductors 34. For example, the first positive frame-shaped main busbar 30a may be connected to 1x4 high voltage connectors 22 by 1x4 electrical conductors 34, as shown e.g. in **FIG. 7****.** Moreover, the second positive frame-shaped main busbar 30b may be connected to a greater number of the high voltage connectors 22 by a second subset of the electrical conductors 34. For example, the second positive frame-shaped main busbar 30b may be connected to 3x4 high voltage connectors 22 by 3x4 electrical conductors 34, as shown e.g. in **FIG. 8****.** Notably the electrical conductors 34 of the second subset (**FIG. 8**) may be shorter than the electrical conductors 34 of the first subset (**FIG. 7**).

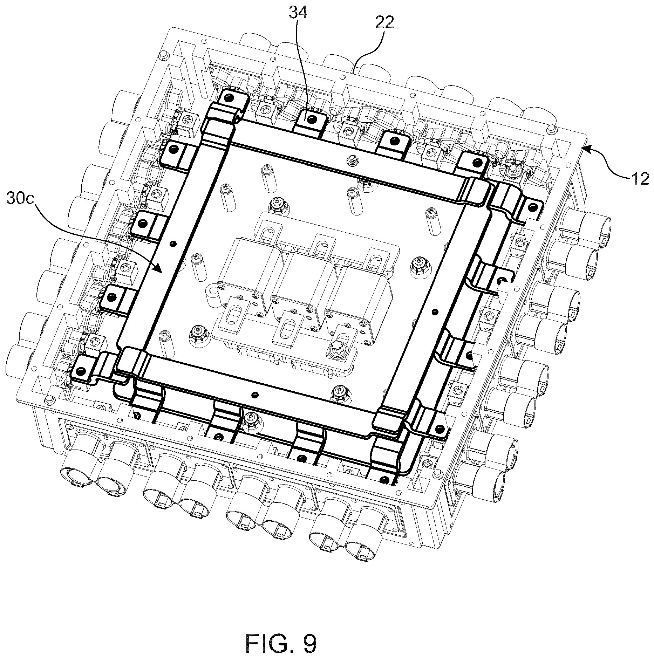

Similarly, the negative frame-shaped main busbar 30c may be arranged to surround the first positive frame-shaped main busbar 30a, although the negative frame-shaped main busbar 30c may be arranged elevated inside the housing 12 compared to first positive frame-shaped main busbar 30a. The negative frame-shaped main busbar 30c may be larger than the first positive frame-shaped main busbar 30a. Moreover, the negative frame-shaped main busbar 30c may be connected to all of the high voltage connectors 22, here by a third subset of the electrical conductors 34. For example, the negative frame-shaped main busbar 30c may be connected to the 4x4 high voltage connectors 22 by 4x4 electrical conductors 34, as shown e.g. in **FIG. 9****.** Again, the electrical conductors 34 of the third subset (**FIG. 9**) may be shorter than the electrical conductors 34 of the first subset (**FIG. 7**).

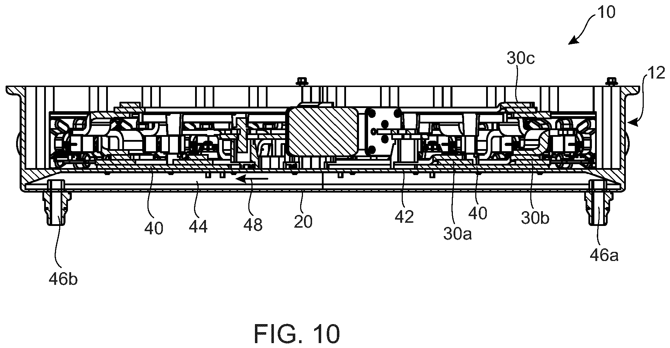

With further reference to **FIG. 10****,** the high voltage junction box 10 may further comprise a cooling interface 40. The cooling interface 40 may for example be a thermal interface material (TIM). Alternatively, the cooling interface 40 could be a thermal pad, thermal gap filler, or thermal conductive adhesives, for example. The cooling interface 40 may be arranged between one or both of the positive (fused) frame-shaped main busbars 30a-b and the housing 12, such that the cooling interface 40 is in contact with the positive frame-shaped main busbars 30a-b for transferring heat away from positive frame-shaped main busbars 30a-b. On the other hand, the negative frame-shaped main busbar 30c may be arranged elevated inside the housing 12 compared to the positive frame-shaped main busbars 30a-b, such that the negative frame-shaped main busbar 30c is not in contact with the cooling interface 40. The elevated negative frame-shaped main busbar 30c may for example be placed directly above the second positive frame-shaped main busbar 30b inside the housing 12.

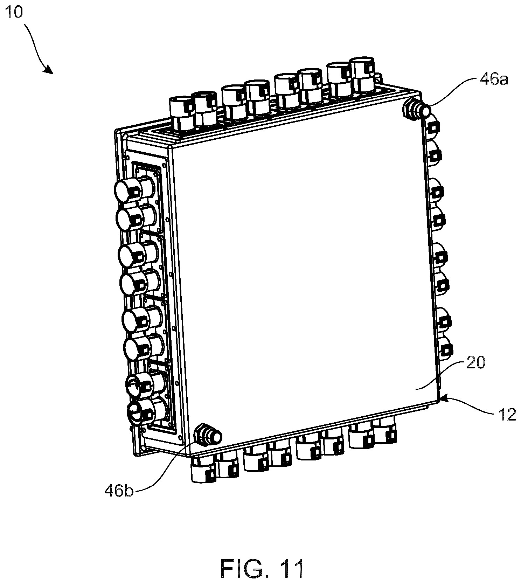

Specifically, the cooling interface 40 may be arranged between the positive frame-shaped main busbars 30a-b and a coolant lid 42 of the high voltage junction box 10, which coolant lid 42 in turn may be arranged inside the housing 12 on the base plate 20. The cooling interface 40 is preferably in (direct physical) contact with the positive frame-shaped main busbars 30a-b and the coolant lid 42. The coolant lid 42 may be arranged to seal off a coolant path 44 in (the top of) the base plate 20. The coolant path 44 may for example comprise one or more coolant channels. The base plate 20 of the housing 12 may further comprise a coolant inlet 46a and a coolant outlet 46b in fluid communication with the coolant path 44. Thereby, a coolant 48 may flow into the high voltage junction box 10 via the coolant inlet 46a, through the coolant path 44 where the coolant 48 may absorb heat from the positive frame-shaped main busbars 30a-b, and out from the high voltage junction box 10 via the coolant outlet 46b. The coolant inlet 46a and the coolant outlet 46b may be arranged at opposite corners of the base plate 20 of the housing 12, as in **FIG. 11****.** When the high voltage junction box 10 is installed e.g. in the vehicle 100, the coolant inlet 46a should be higher than and the coolant outlet 46b, so that the coolant 48 may flow through the coolant path 44 and out via the coolant outlet 46b with the help of gravity. The aforementioned at least one further component 36 may for example be mounted on (top of) the coolant lid 42. Moreover, in another example, (also) the negative frame-shaped main busbar 30c could be in direct physical contact with the cooling interface 40.

In another variant, the cooling interface 40 could be arranged immediately between the positive frame-shaped main busbars 30a-b and the base plate 20, whereby an external coolant lid may be arranged outside the housing 12 on the base plate 20. In this variant, the coolant inlet and the coolant outlet could be arranged at opposite corners of the external coolant lid. Also in this variant, the aforementioned at least one further component 36 may be mounted on (top of) the base plate 20.

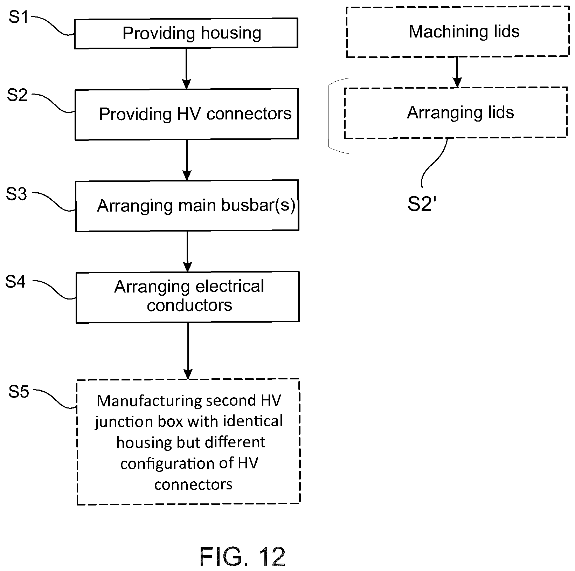

**FIG. 12** is a flow chart of an exemplary method of method of manufacturing a high voltage junction box, such as the high voltage junction box 10.

At S 1, the method may comprise providing the housing 12 having a plurality of sides 14. The sides 14 of the housing may for a frame 16. Providing the housing 12 may for example include casting the housing 12.

At S2, the method may comprise providing the plurality of high voltage connectors 22 at one or more of the sides 14 of the housing 12. The number and position of the high voltage connectors 22 may depend on the intended specific application of the high voltage junction box 10 being manufactured. In the configuration show in **FIG. 1****,** four high voltage connectors 22 are provided at every side 14 of the housing 12, resulting in 4x4 high voltage connectors 22 in total. In other configurations, any side 14 of the housing 12 could have fewer high voltage connectors 22, including at least one side 14 with no voltage connector 22 at all.

Providing the plurality of high voltage connectors 22 at one or more of the sides 14 of the housing 12 may comprise arranging S2' a plurality of lids 26, one at each side 14 of the housing 12, wherein the plurality of high voltage connectors 22 are provided in one or more of the lids 26. S2' may be preceded by machining the holes 28 in one or more of the lids 26 for the plurality of high voltage connectors 22. Notably only the holes 28 needed for the specific application of the high voltage junction box 10 being manufactured have to be machined. Moreover, all the lids 26 may have the same, standard size, and it is just the number and/or position of the holes 28 that may differ depending on the specific application of the high voltage junction box 10 being manufactured. Following machining, the lids 26 may be attached to the housing 12, whereafter the high voltage connectors 22 may be mounted in the holes 28 of the lids 26, for example by screws.

At S3, the method may comprise arranging the at least one frame-shaped main busbar 30a-c inside the housing 12. Each of the at least one frame-shaped main busbar 30a-c may extend along each of the sides 14 of the housing 12, to allow connection from each side 14 of the housing 12.

At S4, the method may comprise arranging the plurality of electrical conductors 34 to connect the at least one frame-shaped main busbar 30a-c to the high voltage connectors 22.

For example, the method may comprise adding the second positive frame-shaped main busbar 30b (S3) inside the housing 12, and adding flexible busbars 34 (S4) to meet the high voltage connectors 22 that are assembled and associated with the second positive frame-shaped main busbar 30b. The method may thereafter comprise adding the first positive frame-shaped main busbar 30a (S3) inside the housing 12, and adding flexible busbars 34 (S4) to meet the high voltage connectors 22 that are assembled and associated with the first positive frame-shaped main busbar 30a. The method may thereafter comprise adding the negative frame-shaped main busbar 30c (S3) inside the housing 12, and adding flexible busbars 34 (S4) to meet the high voltage connectors 22 that are assembled.

At S5, the method may comprise manufacturing another (second) high voltage junction box 10'. The second high voltage junction box 10' may be manufactured by: providing a housing 12 having a plurality of sides 14 forming a frame 16, wherein the housing of the (first) high voltage junction box 10 is identical to the housing 12 of the second high voltage junction box 10'; arranging a plurality of lids 26, one at each side 14 of the housing 12 of the second high voltage junction box 10', wherein a plurality of high voltage connectors 22 are provided in one or more of the lids 26 second high voltage junction box 10'; arranging at least one frame-shaped main busbar 30a-c inside the housing 12 of the second high voltage junction box 10', wherein each of the at least one frame-shaped main busbar 30a-b extends along each of the sides 14 of the housing 12 of the second high voltage junction box 10'; and arranging a plurality of electrical conductors 34 to connect the at least one frame-shaped main busbar to the high voltage connectors, wherein the lids 26 of the first high voltage junction box 10 have a different configuration of high voltage connectors 22 than the lids 26 of the second high voltage junction box 10'. That is, the number and/or position of the high voltage connectors 22 may be customized and thus differ between the high voltage junction boxes 10 and 10', whereas at least the housings 12 may be standardized. Moreover, the lids 26 of both high voltage junction boxes 10 and 10' may have the same standard size, and it is just the number and/or position of the holes 28 that may differ depending on the configuration of high voltage connectors 22, which in turn depends on the specific application of the respective high voltage junction box 10 and 10' being manufactured.

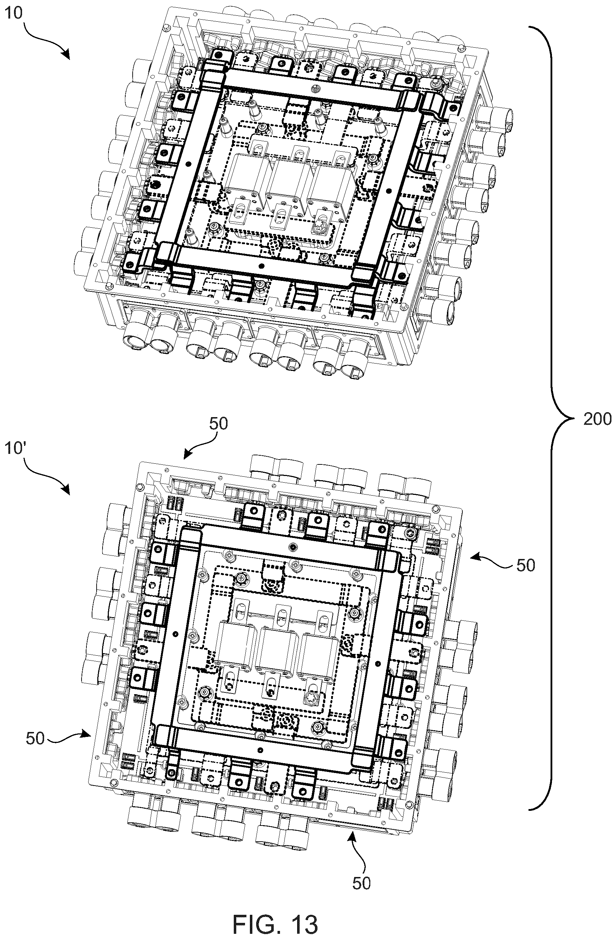

A resulting kit 200 comprising the first and second high voltage junction boxes 10, 10' is illustrated in **FIG. 13****.** In the illustrated kit 200, the first high voltage junction box 10 is the same as in **FIG. 1****,** i.e. with 4x4 high voltage connectors 22. On the other hand, the second high voltage junction box 10' may instead have say 3x4 high voltage connectors 22, resulting in four less high voltage connectors 22 and openings 28 at the positions designated by reference sign 50 in **FIG. 13****.** Also the corresponding electrical conductors 34 may be omitted. That is, at the position 50, neither any high voltage connector 22 nor any electrical conductors 34 are used. The second high voltage junction box 10' may otherwise be identical to the first high voltage junction box 10. The second high voltage junction box 10' may for example be intended for a vehicle of a different variant or model or type than vehicle 100.

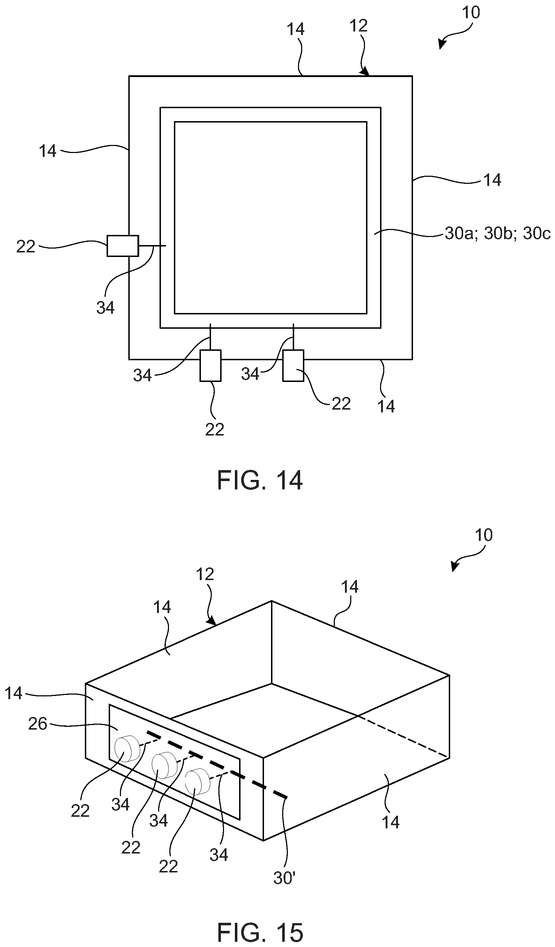

**FIG. 14** is another view of **FIG. 1****,** according to an example. The high voltage junction box 10 in **FIG. 14** comprises: a housing 12 having a plurality of sides 14 forming a frame 16; a plurality of high voltage connectors 22 provided at one or more of said sides 14; at least one frame-shaped main busbar 30a-c arranged inside the housing 12, wherein each of the at least one frame-shaped main busbar 30a-c extends along each of said sides 14; and a plurality of electrical conductors 34 arranged to connect the at least one frame-shaped main busbar 30a-c to the high voltage connectors 22.

**FIG. 15** is another view of **FIG. 1****,** according to an example. The high voltage junction box 10 in **FIG. 15** comprises a housing 12 having a plurality of sides 14; a plurality of high voltage connectors 22 provided at at least one of said sides 14; at least one lid 26 provided at at least one of the sides 14 of the housing 12, wherein the plurality of high voltage connectors 22 are provided in the at least one lid 26, at least one main busbar 30' arranged inside the housing 12; and a plurality of electrical conductors 34 arranged to connect the at least one main busbar 30' to the high voltage connectors 22.

Example 1: A high voltage junction box, comprising: a housing having a plurality of sides forming a frame; a plurality of high voltage connectors provided at one or more of said sides; at least one frame-shaped main busbar arranged inside the housing, wherein each of the at least one frame-shaped main busbar extends along each of said sides; and a plurality of electrical conductors arranged to connect the at least one frame-shaped main busbar to the high voltage connectors.

Example 2: The high voltage junction box of example 1, wherein all of said sides of the housing are equal.

Example 3: The high voltage junction box of any of examples 1-2, wherein each of the at least one frame-shaped main busbar is rectangular.

Example 4: The high voltage junction box of any of examples 1-3, wherein each of the at least one frame-shaped main busbar has a number of elongated main busbar portions corresponding to the number of sides of the housing, and wherein each of said elongated main busbar portions extends along a respective one of the sides of the housing

Example 5: The high voltage junction box of any of examples 1-4, wherein each electrical conductor extends from a respective high voltage connector of the high voltage connectors to an elongated main busbar portion of one of the at least one frame-shaped main busbar, which elongated main busbar portion is closest to the side of the housing at which the high voltage connector is arranged

Example 6: The high voltage junction box of any of examples 1-5, wherein the plurality of electrical conductors comprises flexible busbars.

Example 7: The high voltage junction box of any of examples 1-6, wherein the at least one frame-shaped main busbar comprises at least one positive main busbar and a negative main busbar.

Example 8: The high voltage junction box of any of examples 1-7, wherein the at least one frame-shaped main busbar comprises a first frame-shaped main busbar and second frame-shaped main busbar surrounding the first frame-shaped main busbar, wherein the first frame-shaped main busbar is connected to a subset of the high voltage connectors by a first subset of the electrical conductors, and wherein the second frame-shaped main busbar is connected to a greater number of the high voltage connectors by a second subset of the electrical conductors, the electrical conductors of the second subset being shorter than the electrical conductors of the first subset.

Example 9: The high voltage junction box of any of examples 1-8, wherein the at least one frame-shaped main busbar comprises a first frame-shaped main busbar and a second frame-shaped main busbar, wherein the high voltage junction box further comprises a cooling interface arranged between the first frame-shaped main busbar and the housing such that the cooling interface is in contact with the first frame-shaped main busbar for transferring heat from the first frame-shaped main busbar, and wherein the second frame-shaped main busbar is arranged elevated inside the housing compared to the first frame-shaped main busbar and not in contact with the cooling interface.

Example 10: The high voltage junction box of any of examples 1-9, wherein the housing further comprises a base plate, and wherein at least one further component of the voltage junction box is: centrally positioned relative to said base plate; surrounded by each of the least one frame-shaped main busbar; and electrically connected to at least one of the at least one frame-shaped main busbar.

Example 11: The high voltage junction box of any of examples 1-10, further comprising a plurality of lids, one at each side of the housing, wherein the plurality of high voltage connectors are provided in one or more of said lids.

Example 12: The high voltage junction box of example 11, wherein each lid has space for up to four high voltage connectors and one low voltage connector.

Example 13: The high voltage junction box of any of examples 11-12, wherein each side of the housing has an opening, and wherein each opening is sealingly covered by one of said lids.

Example 14: A vehicle comprising the high voltage junction box according to any of examples 1-13.

Example 15: A kit comprising a first high voltage junction box according to any of examples 11-13 and a second high voltage junction box according to any of examples 11-13, wherein the housing of the first high voltage junction box is identical to the housing of the second high voltage junction box, and wherein the lids of the first high voltage junction box have a different configuration of high voltage connectors than the lids of the second high voltage junction box.

Example 16: A method of manufacturing a high voltage junction box, the method comprising: providing a housing having a plurality of sides forming a frame; providing a plurality of high voltage connectors at one or more of said sides; arranging at least one frame-shaped main busbar inside the housing, wherein each of the at least one frame-shaped main busbar extends along each of said sides; and arranging a plurality of electrical conductors to connect the at least one frame-shaped main busbar to the high voltage connectors.

Example 17: The method of example 16, wherein providing a plurality of high voltage connectors at one or more of said sides comprises arranging a plurality of lids, one at each side of the housing, and wherein the plurality of high voltage connectors are provided in one or more of said lids.

Example 18: The method of example 17, wherein said high voltage junction box is a first high voltage junction box, and wherein the method further comprises manufacturing a second high voltage junction box by: providing a housing having a plurality of sides forming a frame, wherein the housing of the first high voltage junction box is identical to the housing of the second high voltage junction box; arranging a plurality of lids, one at each side of the housing, wherein a plurality of high voltage connectors are provided in one or more of said lids; arranging at least one frame-shaped main busbar inside the housing, wherein each of the at least one frame-shaped main busbar extends along each of said sides; and arranging a plurality of electrical conductors to connect the at least one frame-shaped main busbar to the high voltage connectors, wherein the lids of the first high voltage junction box have a different configuration of high voltage connectors than the lids of the second high voltage junction box.

Example 19: A high voltage junction box, comprising: a housing having a plurality of sides; a plurality of high voltage connectors provided at at least one of said sides; at least one lid provided at at least one of the sides of the housing, wherein the plurality of high voltage connectors are provided in the at least one lid, at least one main busbar arranged inside the housing; and a plurality of electrical conductors arranged to connect the at least one main busbar to the high voltage connectors.

Example 20: A kit of parts for assembling a high voltage junction box, the kit of parts comprising: a housing having a plurality of sides; a plurality of high voltage connectors; a plurality of lids, wherein each lid is adapted to be provided at one of said sides, and wherein the plurality of lids comprises lids with different numbers of interfaces for different numbers of the high voltage connectors; at least one main busbar arrangeable inside the housing; and a plurality of electrical conductors arrangeable to connect the at least one main busbar to the high voltage connectors.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A high voltage junction box, comprising:
a housing having a plurality of sides forming a frame;
a plurality of high voltage connectors provided at one or more of said sides;
at least one frame-shaped main busbar arranged inside the housing, wherein each of the at least one frame-shaped main busbar extends along each of said sides; and
a plurality of electrical conductors arranged to connect the at least one frame-shaped main busbar to the high voltage connectors.

2. The high voltage junction box of claim 1, wherein all of said sides of the housing are equal.

3. The high voltage junction box of any of claims 1-2, wherein each of the at least one frame-shaped main busbar is rectangular.

4. The high voltage junction box of any of claims 1-3, wherein each of the at least one frame-shaped main busbar has a number of elongated main busbar portions corresponding to the number of sides of the housing, and wherein each of said elongated main busbar portions extends along a respective one of the sides of the housing.

5. The high voltage junction box of any of claims 1-4, wherein each electrical conductor extends from a respective high voltage connector of the high voltage connectors to an elongated main busbar portion of one of the at least one frame-shaped main busbar, which elongated main busbar portion is closest to the side of the housing at which the high voltage connector is arranged.

6. The high voltage junction box of any of claims 1-5, wherein the plurality of electrical conductors comprises flexible busbars.

7. The high voltage junction box of any of claims 1-6, wherein the at least one frame-shaped main busbar comprises a first frame-shaped main busbar and second frame-shaped main busbar surrounding the first frame-shaped main busbar, wherein the first frame-shaped main busbar is connected to a subset of the high voltage connectors by a first subset of the electrical conductors, and wherein the second frame-shaped main busbar is connected to a greater number of the high voltage connectors by a second subset of the electrical conductors, the electrical conductors of the second subset being shorter than the electrical conductors of the first subset.

8. The high voltage junction box of any of claims 1-7, wherein the at least one frame-shaped main busbar comprises a first frame-shaped main busbar and a second frame-shaped main busbar, wherein the high voltage junction box further comprises a cooling interface arranged between the first frame-shaped main busbar and the housing such that the cooling interface is in contact with the first frame-shaped main busbar for transferring heat from the first frame-shaped main busbar, and wherein the second frame-shaped main busbar is arranged elevated inside the housing compared to the first frame-shaped main busbar and not in contact with the cooling interface.

9. The high voltage junction box of any of claims 1-8, wherein the housing further comprises a base plate, and wherein at least one further component of the voltage junction box is: centrally positioned relative to said base plate; surrounded by each of the least one frame-shaped main busbar; and electrically connected to at least one of the at least one frame-shaped main busbar.

10. The high voltage junction box of any of claims 1-9, further comprising a plurality of lids, one at each side of the housing, wherein the plurality of high voltage connectors are provided in one or more of said lids.

11. The high voltage junction box of claim 10, wherein each side of the housing has an opening, and wherein each opening is sealingly covered by one of said lids.

12. A vehicle comprising the high voltage junction box according to any of claims 1-11.

13. A kit comprising a first high voltage junction box according to any of claims 10-11 and a second high voltage junction box according to any of claims 10-11, wherein the housing of the first high voltage junction box is identical to the housing of the second high voltage junction box, and wherein the lids of the first high voltage junction box have a different configuration of high voltage connectors than the lids of the second high voltage junction box.

14. A method of manufacturing a high voltage junction box, the method comprising:
providing a housing having a plurality of sides forming a frame;
providing a plurality of high voltage connectors at one or more of said sides;
arranging at least one frame-shaped main busbar inside the housing, wherein each of the at least one frame-shaped main busbar extends along each of said sides; and
arranging a plurality of electrical conductors to connect the at least one frame-shaped main busbar to the high voltage connectors.

15. A kit of parts for assembling a high voltage junction box, the kit of parts comprising:
a housing having a plurality of sides;
a plurality of high voltage connectors;
a plurality of lids, wherein each lid is adapted to be provided at one of said sides, and wherein the plurality of lids comprises lids with different numbers of interfaces for different numbers of the high voltage connectors;
at least one main busbar arrangeable inside the housing; and
a plurality of electrical conductors arrangeable to connect the at least one main busbar to the high voltage connectors.
